# FASCICULE DE BREVET EUROPEEN

(11) **EP 3 459 837 B1**
(45) Date de publication et mention de la délivrance du brevet: **03.01.2024**
(21) Numéro de dépôt: 18198334.7
(22) Date de dépôt: 03.08.2017
(51) Int. Cl.: B63B 1/12, A01K 97/02, B63B 3/08

(54) **DISPOSITIF D'EJECTION D'AMORCE POUR BATEAU AMORCEUR**
VORRICHTUNG ZUM AUSSTOSSEN VON KÖDERN FÜR FUTTERBOOT
BAIT EJECTION DEVICE FOR A BAIT BOAT

(30) Priorité: 16.08.2016 FR 1657781
(43) Date de publication de la demande: 27.03.2019
(62) Demande divisionnaire de: 17184669.4
(73) Titulaire: Custom'In Design, 16100 Châteaubernard (FR)
(72) Inventeur: REBILLARD, Damien Richard, 16200 Bourg Charente (FR)
(74) Mandataire: Ipside

(56) Documents cités:
- EP-A2- 2 327 300
- CN-U- 203 709 044
- US-A- 2 967 604

## Description

### DOMAINE DE L'INVENTION

La présente invention appartient au domaine des engins mobiles flottants. Plus précisément, l'invention concerne les bateaux commandés à distance, radiocommandés par exemple, sans présence humaine à bord. Hormis les applications militaires, de tels bateaux possèdent de nombreuses applications comme la surveillance, l'imagerie subaquatique, la pêche, et les loisirs. Plus particulièrement, l'invention concerne un bateau amorceur radiocommandé destiné à la pêche.

### ÉTAT DE LA TECHNIQUE

Dans le domaine de la pêche ainsi que dans d'autres applications, l'utilisation de bateaux radiocommandés est connue. La commande à distance permet de s'affranchir d'un équipage humain à bord du bateau, les bateaux radiocommandés sont donc dimensionnés selon la nature de leurs missions et de leurs charges utiles.

Plus particulièrement, la pêche à la carpe, pour ne citer que cette espèce ichtyologique, avec amorçage automatique par bateau, nécessite un bateau amorceur discret, opérant dans un rayon d'action lui permettant d'atteindre des cibles relativement éloignées, et doté d'une autonomie suffisante pour une journée de pêche par exemple. De plus, le bateau doit pouvoir larguer de l'amorce dans l'eau de manière efficace afin d'appâter les poissons.

Des solutions de bateaux amorceurs radiocommandés de formes variées et incorporant différentes technologies sont connues. Le plus souvent les solutions connues consistent en des bateaux comportant deux flotteurs de forme élancée solidaires d'une coque principale et agencés sur les deux côtés latéraux de ladite coque de façon symétrique, suivant une structure du type catamaran. Cette structure assure la rigidité, la flottabilité et la stabilité du bateau, mais présente certains inconvénients comme l'encombrement lors du transport et le poids résultant d'un ensemble de pièces d'un seul tenant.

En outre, les bateaux amorceurs existants libèrent l'amorce, contenue dans des compartiments, en la larguant par gravité. Pour cela il est généralement mis en oeuvre des dispositifs d'ouverture automatique de trappes qui laissent l'appât tomber sous le bateau. L'amorce reste donc assez localisée et tout au plus en suivant la trajectoire du bateau. Par conséquent, ces bateaux ne peuvent atteindre des poissons relativement éloignés de leur trajectoire. Pour surmonter cet obstacle, une dispersion efficace de l'amorce, par éjection par exemple, est nécessaire.

Le document EP 2327300 A2 décrit par exemple un bateau catamaran pour la pêche sportive larguant l'amorce uniquement par gravité et ne comprenant aucun dispositif d'éjection.

Le document CN 203709044 U décrit un bateau amorceur comportant une coque, un dispositif d'entrainement et un système d'amorçage pour disperser l'appât. Toutefois, le système d'amorçage de cette solution n'est pas adapté à un stockage de l'amorce sur une surface supérieure avant son éjection.

Le document US 2967604 A décrit quant à lui une centrifugeuse pour la distribution de matériaux granulaires comportant un moyen de diffusion, qui ne peut pas être montée sur des bateaux amorceurs pour la pêche sportive en raison de sa complexité.

### PRÉSENTATION DE L'INVENTION

La présente invention vise à améliorer le processus d'amorçage dudit bateau par un système de dispersion de l'amorce par éjection. Pour ce faire, la présente invention concerne un bateau amorceur tel que revendiqué dans les revendications.

Avantageusement, le bateau comporte deux coques parallèles et un dispositif d'éjection d'amorce situé au-dessus desdites coques et comportant un élément tournant entraîné en rotation autour d'un axe vertical par un moteur électrique d'amorçage, ledit élément tournant comporte une surface supérieure, uniforme ou contenant des gorges concentriques, sur laquelle peut être déposée une amorce. L'amorce peut donc être éjectée à des rayons différents suivant la vitesse de rotation de l'élément tournant.

Préférablement, l'élément tournant comporte sur sa surface supérieure au moins une ailette dont les deux extrémités sont à des distances différentes de l'axe de rotation dudit élément tournant pour permettre une éjection plus efficace de l'amorce.

Avantageusement, la surface supérieure de l'élément tournant présente une concavité globale pour mieux contenir l'amorce et éviter une chute accidentelle de ladite amorce suite à des mouvements brusques du bateau.

De façon avantageuse, le bateau amorceur est radiocommandé pour permettre une utilisation à moindre effort et une plus grande sécurité. En outre, la radiocommande concerne toutes les commandes de propulsion, de pilotage-guidage et d'amorçage dudit bateau.

### BRÈVE DESCRIPTION DES FIGURES

L'invention sera mieux comprise à la lecture de la description qui suit et à l'examen des figures qui l'accompagnent. Celles-ci ne sont présentées qu'à titre indicatif et nullement limitatif de l'invention.
Figure 1a : est une illustration en perspective du bateau selon un premier mode de réalisation non revendiqué le côté gauche et l'avant dudit bateau étant apparents ;
Figure 1b : est une illustration du bateau de la figure 1a en vue de côté, l'avant du bateau étant à droite ;
Figure 2 : est une illustration du bateau selon un second mode de réalisation, non revendiqué, en vue de dessus ;
Figure 3 : est une illustration du bateau de la figure 1a en vue de dessous, laissant apparaitre les trappes de largage d'amorce ;
Figure 4a : est une vue perspective en plongée du bateau de la figure 2 laissant apparaitre partiellement le contenu de la coque inférieure et des flotteurs arrière ;
Figure 4b : est une vue perspective du bateau avec la plateforme et les couvercles de flotteurs en place sur la structure de la figure 4a ;
Figure 4c : est une perspective du bateau avec le plateau à ailettes remis sur la structure de la figure 4b ;
Figure 5 : est un détail en perspective d'un bras de liaison reliant la coque à un flotteur ;
Figures 6a à 6d : sont des illustrations du plateau à ailettes en vue perspective, figures 6a pour un plateau à cinq ailettes et 6d pour un plateau à trois ailettes, en vue de dessus, figure 6b, et en coupe verticale, figure 6c ;
Figure 7 : est un schéma synoptique du circuit électrique du bateau ;
Figure 8 : est une illustration d'un bateau amorceur selon un autre mode de réalisation, non revendiqué, en vue perspective, figure 8a, et en vue de dessous, figure 8b ;
Figures 9a à 9c : sont des illustrations en section des modes d'assemblage entre un bras de liaison et un caisson d'encastrement selon que ledit caisson est « mâle », figure 9a, « femelle », figure 9b, ou « mixte », figure 9c ;
Figure 10 : est une vue perspective d'un branchement électrique à l'intérieur d'un bras de liaison en trait interrompu ;
Figure 11 : est une vue perspective d'un bateau catamaran équipé d'une coque supérieure selon l'invention
Figure 12 : est une vue perspective du bateau de la figure 11 sur lequel est monté le plateau à ailettes.

Sur un même dessin les différentes parties ne sont pas nécessairement représentées à la même échelle et les différents dessins ne sont pas nécessairement à la même échelle. Sur les différents dessins, les éléments identiques portent le même repère.

### DESCRIPTION DÉTAILLÉE DE MODES DE RÉALISATION

L'invention est décrite de manière détaillée dans l'exemple de réalisation d'un bateau amorceur 100 destiné à la pratique de la pêche à la carpe. Ce choix n'est pas limitatif et l'homme du métier transposera sans difficulté, avec ses connaissances générales, les principes de l'invention tels qu'exposés à tout bateau sans pilote, de type USV (pour Unmanned Surface Vehicle), dans d'autres applications.

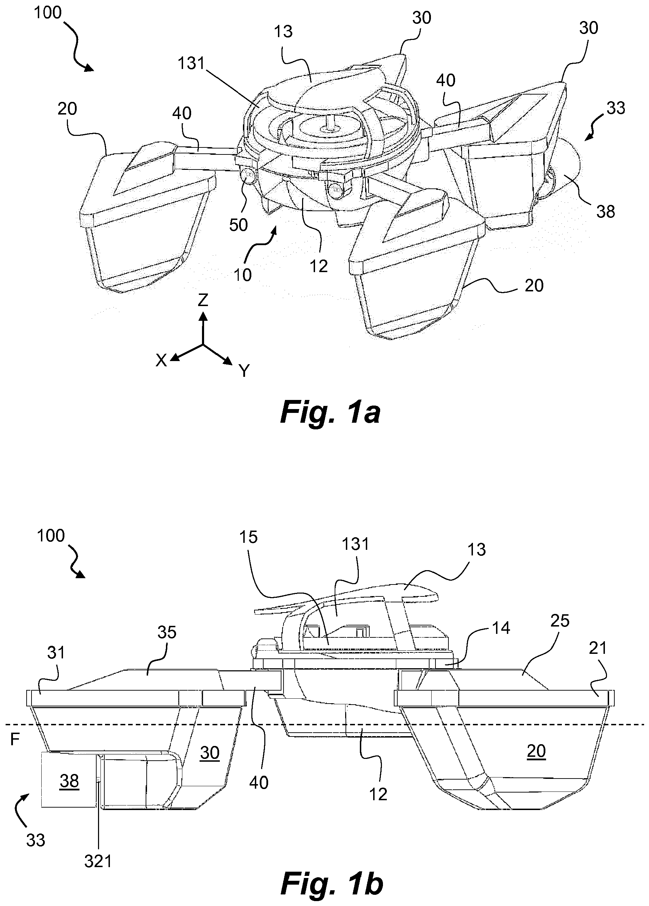

Dans le mode de réalisation décrit, le bateau amorceur 100 est commandé à distance par le biais d'un système d'émission réception radio. En outre, ledit bateau comporte principalement un assemblage de quatre flotteurs, deux flotteurs avant 20 et deux flotteurs arrière 30, autour d'une coque centrale 10, représenté sur la figure 1a.

Dans la suite de la description, les termes « avant », « arrière », « haut », « bas » et les expressions qui peuvent leurs être associées seront comprises, sauf précision ou évidence contraire, comme ayant le sens que leur donnerait un utilisateur du bateau dans une position normale de navigation. Compte tenu du système d'axe représenté sur la figure 1a, l'avant est situé sur le bateau du côté des X positifs et le haut est situé sur le bateau du côté des Z positifs.

Les figures 1a et 1b présentent un exemple de bateau amorceur radiocommandé 100.

La forme générale dudit bateau s'apparente globalement à celle des insectes du genre Aquarius de la famille des gerridés, communément appelés « araignées d'eau ». Cette forme se caractérise par deux paires de pattes dont l'empattement, relativement important, permet une grande stabilité à la surface de l'eau.

Dans l'exemple de réalisation illustré sur les figures 1a et 1b, le bateau amorceur 100 est constitué d'un assemblage de parties amovibles dont les dimensions individuelles permettent de faciliter leur transport et leur manipulation. Dans un exemple de réalisation, le bateau amorceur 100 assemblé présente une longueur de 70 cm, une largeur de 60 cm et une hauteur de 25 cm. En outre, la coque 10 et chaque flotteur 20 et 30 présentent respectivement des longueurs égales de 27 cm, des largeurs de 21 cm et 18 cm et des hauteurs de 15 cm et 18 cm. On obtient donc un gain d'espace considérable quand le bateau est désassemblé avec les flotteurs séparés de la coque.

Le bateau amorceur 100 de l'exemple illustré comporte principalement deux familles de composants, une famille structurale et une famille fonctionnelle.

La famille structurale tient compte de la conception et de l'architecture générale du bateau. Elle se décline en :
- une coque centrale 10
- quatre bras de liaison 40
- quatre flotteurs, deux flotteurs avant 20 et deux flotteurs arrière 30

La famille fonctionnelle quant à elle, assure le fonctionnement du bateau lors d'une mission. Elle comporte :
- un système de propulsion
- un système d'amorçage
- un système de pilotage à distance
- des batteries d'alimentation électrique

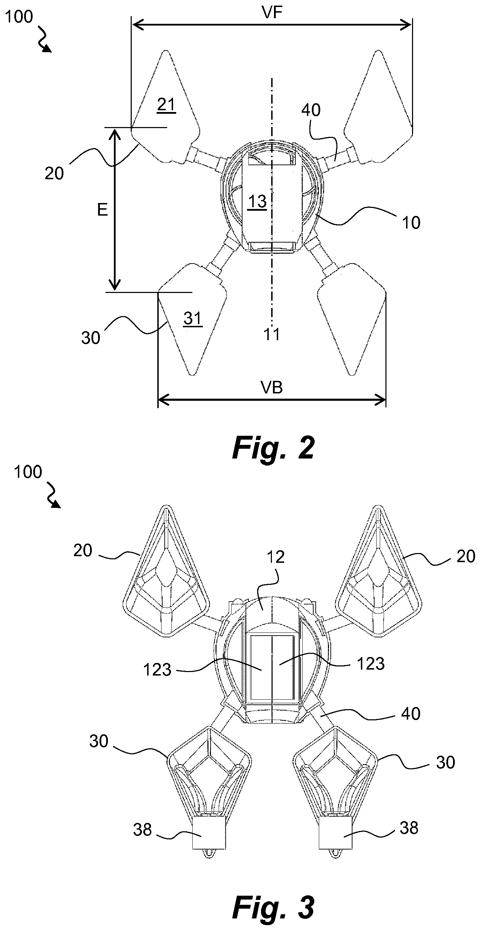

Dans l'exemple de réalisation illustré, le bateau amorceur 100 possède un plan de symétrie vertical XZ qui est aussi un plan de symétrie de la coque 10, voir figures 1a et 2. En outre, les quatre flotteurs sont agencés parallèlement à la coque 10, c'est-à-dire que des axes longitudinaux desdits flotteurs sont parallèles à l'axe longitudinal 11 de ladite coque représenté sur la figure 2.

La coque centrale 10 est composée, dans l'exemple illustré, de deux parties principales distinctes, à savoir une coque inférieure 12 au contact, au moins en partie, de l'eau dans un cas normal d'utilisation, et une coque supérieure de forme convexe et avantageusement aérodynamique formant un toit amovible 13 représenté sur les figures 1a et 1b.

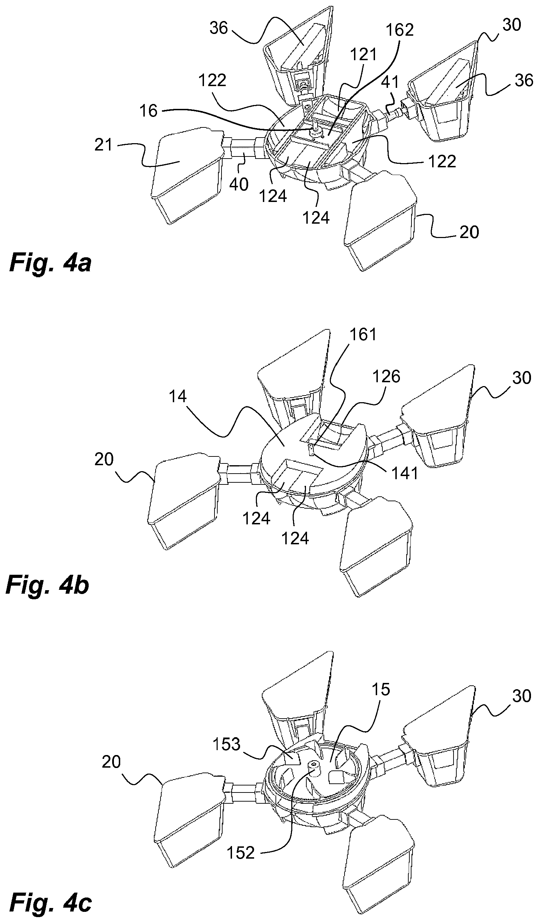

Dans l'exemple de réalisation illustré, la coque inférieure 12 comporte trois compartiments distincts : un bac d'amorce principal 121 et deux compartiments étanches 122 représentés sur la figure 4a. De plus, le bac d'amorce principal 121 comporte deux trappes inférieures 123 de largage d'amorce par gravité placées dans une partie inférieure dudit bac et formant le fond du bac quand lesdites trappes inférieures sont fermées, voir le détail de la figure 3, et deux trappes supérieures 124 de remplissage placées dans une partie supérieure dudit bac et représentées sur les figures 4a et 4b. Chaque trappe inférieure 123 et chaque trappe supérieure 124 est articulée sur la coque inférieure 12 par une liaison pivot.

Dans l'exemple de réalisation illustré, le bac d'amorce principal 121 est placé au milieu de la coque inférieure 12 suivant la direction longitudinale de ladite coque inférieure. En outre, un compartiment étanche 122 est placé de chaque côté latéral du bac principal. Il résulte de cette configuration deux compartiments étanches 122 symétriques par rapport au plan vertical de symétrie du bac principal 121 qui est également le plan vertical XZ de symétrie de la coque centrale 10.

En outre, la coque centrale 10 contient, dans l'exemple illustré, une plateforme 14, représentée sur les figures 1b et 4b, séparant la coque inférieure 12 du toit amovible 13, ladite plateforme est un couvercle fermant les compartiments étanches 122 par deux parties latérales, reliées par une bande rectangulaire, de même forme que lesdits compartiments et présentant ainsi une forme de H apparente sur la figure 4b, la plateforme 14 étant en place sur la structure de la figure 4a. En outre, ladite plateforme comporte un trou 141 en son centre par lequel passe un arbre d'entrainement comme il sera détaillé ultérieurement dans la présente description.

Dans l'exemple de réalisation illustré, le toit amovible 13 possède une forme en profil cambrée et comporte des ouvertures 131, latérales et frontales, représentées sur les figures 1a et 1b.

Dans d'autres exemples de réalisation, le toit amovible 13 peut être plan ou courbé présentant une forme de calotte légèrement sphérique par exemple.

Le bac d'amorce principal 121, dans l'exemple illustré, comporte une fente 126 sensiblement au milieu de la paroi arrière dudit bac et légèrement parallèle au plan vertical XZ de symétrie de la coque centrale 10, représentée sur la figure 4b, ladite fente débouche sur une ouverture supérieure dudit bac principal par une première extrémité et sur les trappes inférieures dudit bac principal par une seconde extrémité.

La coque inférieure 12, dans l'exemple illustré, comporte quatre caissons 125 d'encastrement, dans chacun desquels est placé un bras de liaison 40, engagé par une de ses extrémités.

Chaque bras de liaison 40, dans l'exemple de réalisation illustré, est un tube cylindrique de section rectangulaire. Les quatre bras de liaison 40 sont disposés par paires symétriquement par rapport au plan vertical XZ de symétrie de la coque 10 quand ils sont montés sur ladite coque, comme représenté sur la figure 2. En outre, chaque bras présente une forme adaptée pour s'emboiter par glissement, avec un jeu minimum, dans un caisson 125 d'encastrement dans lequel il est placé à une extrémité proximale, extrémité la plus proche de la coque. L'extrémité distale, opposée à l'extrémité proximale, dudit bras étant montée de la même manière dans un caisson 25 et 35 d'encastrement d'un flotteur 20 et 30 comme on le verra ultérieurement dans la présente description.

Dans le mode de réalisation décrit, les caissons 125, 25 et 35 peuvent présenter des formes correspondant à trois configurations différentes de montage avec les bras de liaison 40 : une configuration « mâle », une configuration « femelle » et une configuration « mixte ».

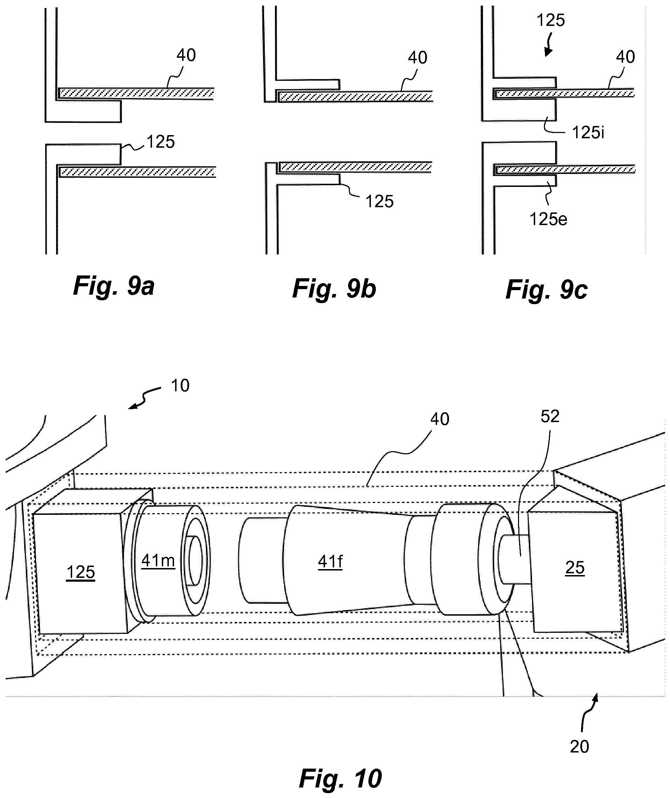

Dans la configuration « mâle », représentée sur la figure 9a, le caisson 125 est placé à l'intérieur du bras de liaison 40.

Dans la configuration « femelle », représentée sur la figure 9b, l'extrémité concernée du bras de liaison 40, en l'occurrence l'extrémité proximale sur la figure 9b, est placée à l'intérieur du caisson 125.

La configuration « mixte », représentée sur la figure 9c, est une combinaison des deux précédentes dans laquelle l'extrémité concernée du bras de liaison 40 est placée entre deux parties du caisson 125, une partie intérieure 125i et une partie extérieure 125e, à la manière d'un câble coaxial.

Chaque couple caisson - extrémité du bras de liaison selon l'invention peut être réalisé dans l'une des configurations supra. Sur les figures 9a, 9b et 9c, seul un caisson 125 d'encastrement de la coque 10 est représenté, cependant, la description reste aussi valable pour les caissons 25 et 35 d'encastrement des flotteurs 20 et 30.

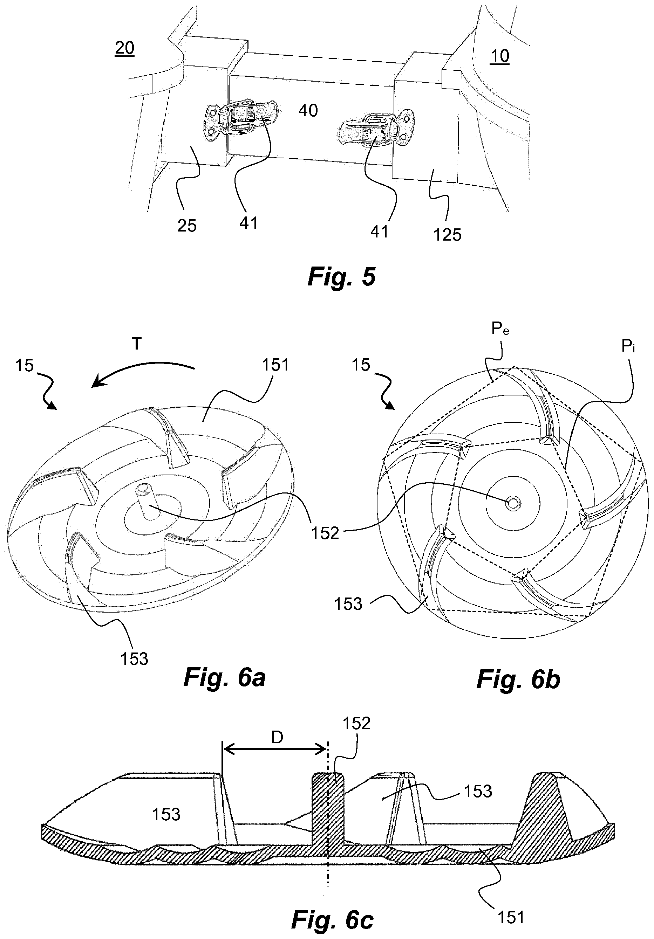

Dans l'exemple de réalisation illustré, chaque bras de liaison 40 est bloqué, à chacune de ses extrémités, dans un caisson 125, 25 et 35 d'encastrement correspondant par une fermeture rapide, telle une fermeture à levier 41 dans le cas d'un caisson « femelle » ou « mixte », entre ledit bras et ledit caisson comme représenté sur le détail de la figure 5.

Le verrouillage des bras de liaison 40 dans les caissons 125, 25 et 35 d'encastrement peut être réalisé par des mécanismes de type goupilles ou clips par exemple.

Quand le bateau amorceur 100 est assemblé, selon le mode de réalisation décrit, chaque bras de liaison 40 est alors encastré dans la coque centrale 10 par l'une de ses extrémités, et dans un flotteur 20 et 30 par l'autre extrémité, opposée à la première.

Dans l'exemple de réalisation illustré, chaque flotteur 20 et 30 a une forme en plan d'un quadrilatère formé de deux paires de côtés adjacents égaux, présentant la forme de deux triangles isocèles dont les bases sont confondues, comme représenté sur la figure 2. Il est désigné par pointe avant le sommet formé par les deux côtés de plus grande longueur, et par pointe arrière le sommet opposé au précédent.

Ainsi, dans l'exemple de réalisation illustré, les flotteurs avant 20 ont leurs pointes avant orientées vers l'avant du bateau, et les flotteurs arrière 30 ont leurs pointes avant orientées vers l'arrière du bateau, voir figure 2. Cette configuration procure au bateau amorceur 100 une forme hydrodynamique plus avantageuse en déviant le moins possible l'écoulement de l'eau autour dudit bateau grâce à une minimisation des variations brutales de section.

Chaque flotteur 20 et 30, dans l'exemple de réalisation illustré, est une structure creuse fermée par un couvercle 21 et 31, représenté en profil sur la figure 1b et en perspective sur la figure 4a, les couvercles arrière 31 ayant été retirés pour rendre visible l'intérieur des flotteurs arrière 30.

Dans le mode de réalisation décrit, les flotteurs arrière 30 sont moteurs, autrement dit, ils comportent chacun un moteur de propulsion du bateau amorceur 100.

Le système de propulsion du bateau amorceur 100 comporte principalement, dans l'exemple de réalisation illustré, deux moteurs électriques 32 sans balais, deux hélices 33, chacune étant couplée à un desdits moteurs, et deux variateurs de vitesse 34, chacun contrôlant la vitesse de rotation d'un desdits moteurs.

Chaque moteur électrique 32, dans l'exemple de réalisation illustré, est placé à l'intérieur d'un flotteur arrière 30.

Chaque hélice 33 de propulsion, dans l'exemple de réalisation illustré, est placée à l'extérieur d'un flotteur arrière 30 dans une partie arrière inférieure du flotteur et agencée suivant un axe longitudinal dudit flotteur. Voir les figures 1a et 1b.

Les hélices 33 de propulsion sont symétriques par rapport au plan vertical de symétrie du bateau amorceur 100. En outre, lesdites hélices sont couplées, chacune, à un moteur électrique 32 via un arbre d'entrainement 321, et placées en dessous de la ligne de flottaison F du bateau pour travailler totalement immergées, voir figure 1b. Les axes de rotation desdites hélices sont légèrement parallèles à l'axe longitudinal 11 du bateau.

Dans l'exemple de réalisation illustré sur les figures 1a, 1b et 3, les hélices 33 sont placées chacune à l'intérieur d'un tube 38 de protection. Cette solution permet de s'affranchir de manière avantageuse de tout accrochage éventuel desdites hélices dans des algues par exemple.

Dans l'exemple de réalisation illustré, chaque moteur électrique 32 est branché à un variateur de vitesse 34, chacun desdits variateurs étant placé dans un compartiment étanche 122 de la coque inférieure 12.

Les variateurs de vitesse 34 peuvent, dans un autre exemple de réalisation non illustré, être placés dans les flotteurs arrière.

Le système d'amorçage du bateau amorceur 100, selon le mode de réalisation décrit, se décompose en deux sous systèmes, un système d'amorçage statique et un système d'amorçage dynamique.

Le système d'amorçage statique comprend le bac d'amorce principal 121 introduit précédemment et situé dans la coque inférieure 12, ainsi que les trappes inférieures 123 de largage et supérieures 124 de remplissage, voir la figure 4a.

Le système d'amorçage dynamique, selon le mode de réalisation décrit, comporte principalement un plateau 15 à ailettes, un moteur électrique 16 de type sans balais et un variateur de vitesse 17 contrôlant la vitesse de rotation dudit moteur.

Le plateau 15 à ailettes, dans l'exemple de réalisation illustré sur les figures 6a et 6b, possède une forme d'une assiette, dont la concavité est tournée vers le haut du bateau, comportant des gorges 151, lesdites gorges sont concentriques et forment un profil ondulé de la surface supérieure dudit plateau, représenté sur la coupe verticale de la figure 6c. De plus, ledit plateau comporte en son centre un moyeu 152 sous forme de logement cylindrique.

Le plateau 15 à ailettes, dans l'exemple illustré, repose sur la plateforme 14 de la coque centrale 10 par une surface plane de la face inférieure dudit plateau, représentée sur la figure 1b.

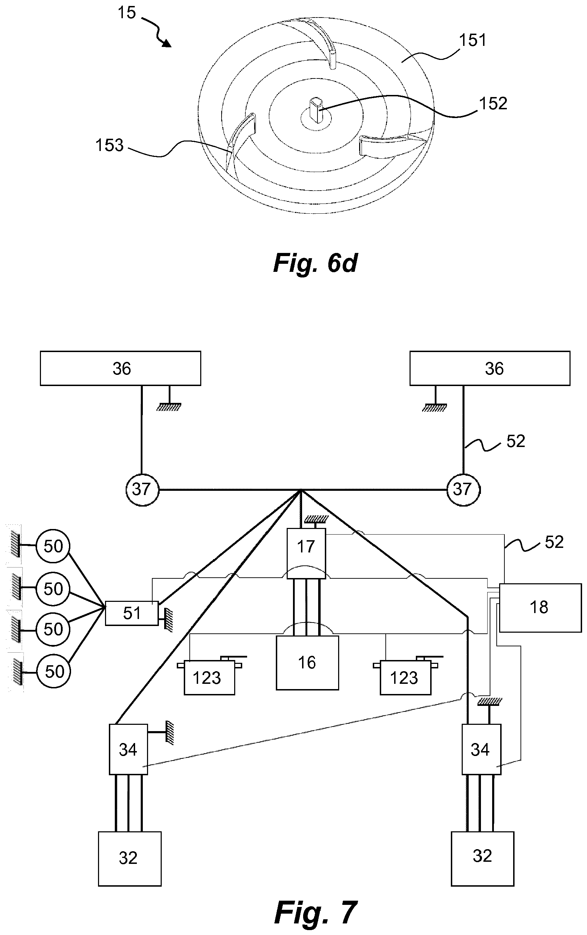

En outre, le plateau 15 à ailettes de l'exemple de réalisation décrit, est muni soit de trois ailettes 153 dans un exemple de réalisation illustré sur la figure 6d, de cinq ailettes 153 dans l'exemple des figures 6a et 6b, ou de six ailettes 153 dans l'exemple de la figure 4c. Lesdites ailettes sont régulièrement espacées de sorte à former par leurs extrémités extérieures et intérieures des polygones réguliers Pₑ et Pᵢ respectivement.

Dans une forme de réalisation préférée, le plateau 15 à ailettes comporte trois ailettes 153. Avantageusement, cette solution permet de disposer de plus d'espace de stockage d'amorce sur ledit plateau.

Dans l'exemple de réalisation illustré, l'extrémité extérieure de chaque ailette 153 est située sur le bord du plateau 15, tandis que l'extrémité intérieure de chacune desdites ailettes est située à l'intérieur dudit plateau à une distance D de l'axe central du moyeu 152, supérieure au rayon du moyeu.

Cette condition n'étant cependant pas exigée, la seule condition nécessaire au fonctionnement normal du mécanisme est le fait d'avoir des extrémités de l'ailette placées à des distances différentes du centre du plateau 15 à ailettes.

L'extrémité intérieure de chaque ailette 153 est légèrement droite, c'est-à-dire qu'elle forme un angle droit avec un plan transversal du plateau 15 à ailettes, tandis que l'extrémité extérieure de chaque ailette présente un arrondi non tangent pour ne pas gêner le montage du toit amovible 13, de forme sphérique, sur le plateau à ailettes et pour laisser un jeu minimum lors de la rotation dudit plateau sous ledit toit.

Chaque ailette 153, dans l'exemple de réalisation illustré, possède un profil cambré, représenté sur les figures 6a et 6b, présentant deux faces, une face convexe et une face concave. En outre, la direction de chaque ailette, droite joignant ses deux extrémités, est légèrement inclinée par rapport à la direction radiale du plateau à ailettes passant par le centre de ladite ailette.

Le moteur électrique 16 du système d'amorçage dynamique, dans l'exemple de réalisation illustré, est placé sous la plateforme 14 de la coque centrale 10 comme représenté sur la figure 4a. L'arbre d'entrainement 161 dudit moteur traverse le trou 141 de ladite plateforme et est placé dans le moyeu 152 du plateau 15 à ailettes, voir l'enchainement du montage sur les figures 4a, 4b et 4c.

La transmission du mouvement entre l'arbre de rotation 161 et le moyeu 152 dans lequel ledit arbre est engagé est assurée par des cannelures, des parties saillantes ou des formes à arête (carré, triangle, ...) par exemple, qui sont des solutions conventionnelles bien connues de l'homme du métier. Dans l'exemple de réalisation illustré sur la figure 6d, la transmission de la rotation entre l'arbre 161 et le moyeu 152 est réalisée par un cardan à méplat.

Le variateur de vitesse 17, dans l'exemple de réalisation illustré, est placé dans l'un des compartiments étanches 122 de la coque inférieure 12.

Dans le mode de réalisation décrit, le système de pilotage à distance comprend principalement un émetteur et un récepteur radio, l'émetteur étant isolé du bateau et situé sur un dispositif de commande.

Le récepteur 18 de la radiocommande est relié au circuit électrique du bateau amorceur 100 et est placé, par exemple, dans un des compartiments étanches 122 de la coque inférieure 12.

Dans le mode de réalisation décrit, le bateau amorceur 100 est alimenté en énergie électrique par deux batteries 36 de type lithium-polymère dites batteries LiPo. Lesdites batteries sont placées chacune, dans l'exemple de réalisation illustré, dans un flotteur arrière 30 ou avant 20 et fixées de sorte à ne pas bouger lors des mouvements du bateau amorceur 100. De plus, chaque batterie 36 est raccordée électriquement à une prise 41 placée à l'intérieur du bras de liaison 40 associé au flotteur arrière ou avant dans lequel est fixée ladite batterie, comme représenté sur la figure 4a, les bras de liaison 40 arrière n'étant pas représentés pour permettre la visualisation des prises 41.

La figure 10 illustre une prise 41 électrique placée à l'intérieur d'un bras de liaison 40, en trait interrompu, lequel bras étant monté entre deux caissons 125 et 25 selon une configuration « mâle » desdits caissons. Ladite prise électrique comporte une partie mâle 41m et une partie femelle 41f. Dans l'exemple illustré, la partie mâle de la prise 41 est solidaire du caisson 25. Le câble 52 issu de la partie femelle de la prise 41 traverse quant à lui l'ouverture du caisson 125.

Les batteries 36 sont en outre reliées au reste du circuit électrique du bateau amorceur 100 via des interrupteurs 37 connectés chacun à une desdites batteries.

Dans le mode de réalisation décrit, l'installation électrique du bateau amorceur 100, représentée sur le schéma synoptique de la figure 7, en plus de comporter les éléments suivants :
- deux batteries 36 LiPo
- deux interrupteurs 37
- un récepteur de radiocommande 18
- un moteur électrique 16 sans balais du système d'amorçage et son variateur de vitesse 17
- deux servo trappes 123 et/ou des électroaimants
- deux moteurs électriques 32 sans balais du système de propulsion et leurs deux variateurs de vitesse 34
Ladite installation électrique comporte des contrôleurs, des lampes témoins 50 de type diodes électroluminescentes « LED », un module interrupteur 51 et des câbles électriques 52.

Selon le mode de réalisation décrit, le bateau amorceur 100 se caractérise par sa capacité à jeter de l'amorce dans l'eau, à différents endroits et de différentes façons, afin d'appâter les poissons.

Le bateau amorceur 100, selon le mode de réalisation décrit, se caractérise par deux types d'amorçages, un amorçage statique et un amorçage dynamique.

L'amorçage statique consiste à larguer l'amorce contenue dans le bac principal 121 situé dans la coque inférieure 12 par gravité. Ledit bac est rempli avec de l'amorce par les trappes 124 de remplissage, lesdites trappes sont manuelles et accessibles, leur accès étant avantageusement facilité quand le plateau 15 à ailettes est retiré comme représenté sur la figure 4b, ledit plateau n'étant pas en place sur la plateforme 14. En outre, le plateau 15 à ailettes empêche les trappes 124 de remplissage de s'ouvrir quand il est monté sur la coque inférieure 12, en formant une butée supérieure pour lesdites trappes. Cela permet à l'amorce du bac principal 121 de rester dans ledit bac en cas de renversement du bateau amorceur 100 par exemple. Le plateau à ailettes quant à lui, est immobilisé verticalement, quand il est monté sur la plateforme 14, par le toit amovible 13. L'ensemble étant monté de sorte qu'aucune partie du bateau ne se démonte accidentellement lors d'une navigation normale du bateau.

L'amorce contenue dans le bac principal 121 est larguée quand les trappes inférieures 123 s'ouvrent. Ladite amorce tombe alors dans l'eau sous l'effet de la gravité.

Dans l'exemple de réalisation décrit, les trappes 123 sont radiocommandées. L'utilisateur commande alors leur ouverture et leur fermeture à distance via l'émetteur de la radiocommande. En outre, lesdites trappes présentent une commande TOR (Tout Ou Rien), c'est-à-dire qu'elles présentent deux positions, une position d'ouverture complète, qui laisse tomber l'amorce, et une position de fermeture complète, qui maintient l'amorce dans le bac principal 121.

Une commande telle que décrit supra peut être réalisée par un servomoteur actionnant un système d'aimants et/ou d'électroaimants reliés aux trappes.

De plus le bac d'amorce principal 121 contient la fente 126 par laquelle est engagé le fil de pêche, l'hameçon et le plomb étant placés dans ledit bac principal. Le bateau amorceur 100 reste donc relié à une canne à pêche jusqu'au largage de l'amorce et, par là même, de l'hameçon et du plomb à l'ouverture des trappes 123.

Dans un mode de réalisation alternatif, le bateau amorceur 100 comporte un système indépendant de largage d'une ligne de pêche, la ligne peut alors être larguée indépendamment de l'amorce. Un tel système est par exemple un tube comportant une fente. L'ouverture et la fermeture de ladite fente peuvent être réalisées par une tige métallique actionnée par un servomoteur.

L'amorçage statique opère donc un largage rapide de quantités plus ou moins importantes d'amorce. L'appât largué reste cependant assez localisé sous le bateau amorceur 100 au moment du largage et ne permet pas d'atteindre une zone entourant ledit bateau.

L'amorçage dynamique quant à lui, consiste à disperser l'amorce autour du bateau amorceur 100 dans un rayon désiré, entre 1m et 10m dans l'exemple de réalisation illustré. D'abord, l'amorce est placée sur le plateau 15 à ailettes, répartie sur la surface supérieure dudit plateau. Le plateau 15 à ailettes est alors chargé. Ensuite, le toit amovible 13 est monté sur la structure représentée sur la figure 4c, ledit toit n'y figurant pas, couvrant ainsi l'amorce et le plateau 15 à ailettes, principalement par le haut, comme représenté sur les figures 1a, 2 et 1b.

Lors de l'amorçage dynamique, la rotation du plateau 15 à ailettes s'effectue dans le sens suivant lequel, la face concave de chaque ailette 153 est le bord d'attaque de l'ailette, et par conséquent, la face convexe de chaque ailette 153 est le bord de fuite de l'ailette. Le sens de rotation ainsi déterminé est représenté par la flèche T sur la figure 6a.

Cette condition n'étant pas exigée et la rotation du plateau peut s'effectuer dans un sens comme dans un autre.

La dispersion de l'amorce, autrement dit l'éjection des particules d'appât du plateau tournant, est le résultat du concours de différents phénomènes physiques conditionnés par la nature du contact entre les particules d'appât et la surface du plateau tournant, et la nature du mouvement dudit plateau.

Des particules adhèrent totalement ou partiellement à la surface du plateau, d'autres glissent parfaitement sur la surface de celui-ci.

Selon le mouvement d'une particule d'appât à la surface du plateau tournant, la force centrifuge, l'accélération du plateau tournant, les chocs avec les ailettes et les glissements ou les roulements sur les faces des ailettes, contribuent à l'éjection de l'amorce hors du plateau.

Pour une amorce homogène, différents rayons peuvent être atteints en fonction de la vitesse de rotation du plateau 15 à ailettes tournant. Pour une même vitesse de rotation dudit plateau, différents rayons peuvent être atteints en fonction de la masse, du coefficient de frottement et de la traînée aérodynamique des particules d'appât. Un amorçage efficace consiste alors à utiliser un mélange d'appâts de différentes tailles et de différentes densités pour atteindre des rayons différents lors de l'amorçage par le plateau 15 à ailettes.

Hormis les chocs qu'elles opèrent, les ailettes153 permettent de guider l'amorce vers le bord dudit plateau et lui communiquent une composante de force supplémentaire. Cette force entre une particule d'appât et une ailette 153 est normale au profil de ladite ailette au point de contact entre ladite particule et ladite ailette. Un profil d'ailette convexe, selon la description donnée plus haut, possède donc une normale qui se rapproche de plus en plus de la direction centrifuge en allant du centre vers le bord du plateau 15 à ailettes. Cela permet d'avoir une résultante de forces appliquée à la particule d'appât plus importante que dans le cas d'une ailette droite.

Dans l'exemple de réalisation illustré sur la figure 4c, le plateau 15 à ailettes est plan. Cette configuration permet audit plateau d'opérer une dispersion sans apport d'énergie potentielle de pesanteur, les ailettes 153 dudit plateau projettent, dans ce cas, l'amorce dans le plan dudit plateau. Cependant, cette disposition ne permet pas une éjection avec un angle optimal et ne maintient pas l'amorce, chargée sur le plateau à ailettes, stable en cas d'accélération du bateau amorceur 100, l'amorce peut alors tomber dans l'eau accidentellement lors de mouvements brusques dudit bateau par exemple.

Dans un autre exemple de réalisation illustré sur les figures 6a et 6b, le plateau 15 à ailettes possède une forme légèrement creuse comportant des gorges 151 circulaires et concentriques. Cette disposition permet de stocker l'amorce dans une configuration plus stable que celle d'un plateau plan. En outre, l'amorce est projetée, dans ce cas, dans un cône avec un angle amélioré permettant d'atteindre des rayons plus grands.

Différentes formes du plateau 15 à ailettes ont été testées afin d'optimiser l'éjection de l'amorce.

Dans l'exemple de réalisation illustré, le plateau 15 à ailettes est actionné en rotation par un moteur électrique 16 sans balais, via un arbre de transmission 161 placé dans le moyeu dudit plateau matérialisé par le logement cylindrique 152. Le moteur électrique 16 de type sans balais, également appelé moteur sans charbon ou machine synchrone autopilotée à aimants permanents, est placé directement sur la plateforme 14 ou sur un support 162 représenté sur la figure 4a, en dessous de la plateforme 14 comme représenté sur la figure 4b, l'arbre de transmission 161 passant par le trou 141 de ladite plateforme.

Dans le mode de réalisation décrit, le moteur électrique 16 sans balai est radiocommandé via un variateur de vitesse 17 lui transmettant la commande en vitesse fournie par l'émetteur de la radiocommande via un potentiomètre.

Dans l'exemple de réalisation illustré, la disposition des flotteurs 20 et 30 autour de la coque centrale 10 confère au bateau amorceur une grande stabilité grâce à un empattement relativement important. De plus, chacun desdits flotteurs possède une surface inférieure plane évitant audit bateau de s'enfoncer dans l'eau.

Dans l'exemple de réalisation illustré, l'angle entre les bras de liaison 40 des flotteurs avant 20 est au moins égal à l'angle entre les bras de liaison 40 des flotteurs arrière 30. De sorte que, pour des bras de liaison identiques, la voie avant VF, distance entre les flotteurs avant, est supérieure à la voie arrière VB, représentant la distance entre les flotteurs arrière. En effet, les flotteurs arrière étant plus chargés, il est plus avantageux de diminuer la voie arrière, et donc en contrepartie, d'augmenter le bras de levier longitudinal pour équilibrer le bateau.

En outre, dans l'exemple de réalisation illustré, les bras de liaison 40 sont des tubes dans lesquels passent des câbles et des prises électriques 41 comme représenté sur la figure 4a, les bras de liaison 40 arrière ayant été retirés pour rendre apparents lesdits câbles et prises.

Les câbles et les prises électriques 41 passant par les tubes des bras de liaison 40 permettent de relier les composants électroniques placés dans la coque centrale 10 aux deux batteries 36 LiPo placées chacune dans un flotteur 30 arrière. Les batteries de type LiPo garantissent une autonomie relativement grande. De plus, ces batteries sont facilement rechargeables. Par exemple pour recharger une batterie LiPo, il faut disposer d'un chargeur à microprocesseur et se raccorder à une batterie 12V. Les batteries LiPo présentent aussi l'avantage de posséder un cyclage très élevé, c'est-à-dire qu'elles possèdent un grand nombre de recharges possibles.

Les batteries 36 sont protégées de l'humidité et de l'eau par des couvercles 31 étanches de fermeture des flotteurs arrière 30 dans l'exemple de réalisation illustré, voir figures 4a et 4b.

De même, la coque centrale 10 possède une plateforme 14 qui sert de fermeture pour la coque inférieure 12 protégeant ainsi l'électronique de bord qui se trouve dans les compartiments étanches 122 de ladite coque inférieure, voir figure 4a et 4b.

Dans le mode de réalisation décrit, la propulsion du bateau amorceur 100 est assurée par deux moteurs électriques 32 sans balais couplés chacun à une hélice 33 externe. Chaque moteur électrique 32, ainsi que son variateur de vitesse 34, se trouve dans un flotteur arrière 30. Chaque hélice 33 est entraînée en rotation par un arbre de transmission 321 représenté sur la figure 1b. Lesdites hélices sont placées sous la ligne de flottaison F dudit bateau dans un cas de fonctionnement normal. Cette configuration confère au bateau amorceur 100 une bonne fluidité, et une grande discrétion dans l'eau due à une immersion totale des hélices.

Comme illustré sur la figure 1b, chaque hélice 33 est placée sous une partie du flotteur arrière 30 qu'elle équipe. Cela confine les tourbillons générés par la rotation de l'hélice et diminue leur trace à la surface de l'eau.

Dans le mode de réalisation décrit, la radiocommande du bateau amorceur 100 fonctionne sur une fréquence de travail de 2,4 GHz. Cette gamme de fréquences évite les interférences et permet une réceptivité améliorée avec ledit bateau.

Le dispositif de radiocommande du bateau amorceur 100 s'utilise facilement, il comporte un émetteur et un récepteur 18. Dans un exemple de réalisation, l'émetteur peut être une manette à manche ou une télécommande programmable.

Le récepteur 18 de la radiocommande est relié aux variateurs de vitesse 17 et 34, aux servo trappes 123 et à un module interrupteur des diodes électroluminescentes 50. L'architecture générale de l'installation électrique du bateau amorceur 100 est illustrée dans le schéma de la figure 7.

Dans le mode de réalisation décrit, la coque centrale 10 et les flotteurs 20 et 30 sont fabriqués en plastique Acrylonitrile Butadiène Styrène, dit plastique ABS, pour sa tenue aux chocs, sa rigidité, et sa légèreté, très avantageuses.

Les bras de liaisons 40, selon le mode de réalisation décrit, sont en matériau composite ou en aluminium pour garantir une meilleure rigidité que l'ABS assurant ainsi une meilleure fixation des flotteurs sur la coque centrale.

Dans un mode de réalisation alternatif, un élément structural du bateau amorceur 100 peut être réalisé en tout matériau présentant des caractéristiques de résistance, de densité et d'étanchéité adaptées aux missions dudit bateau. Un tel matériau peut être un polymère comme une résine armée ou non de fibres minérales ou organiques, un matériau composite à fibres de verre ou de carbone, un matériau métallique comme un alliage d'aluminium ou un acier inoxydable par exemple, ou encore une combinaison de ces matériaux.

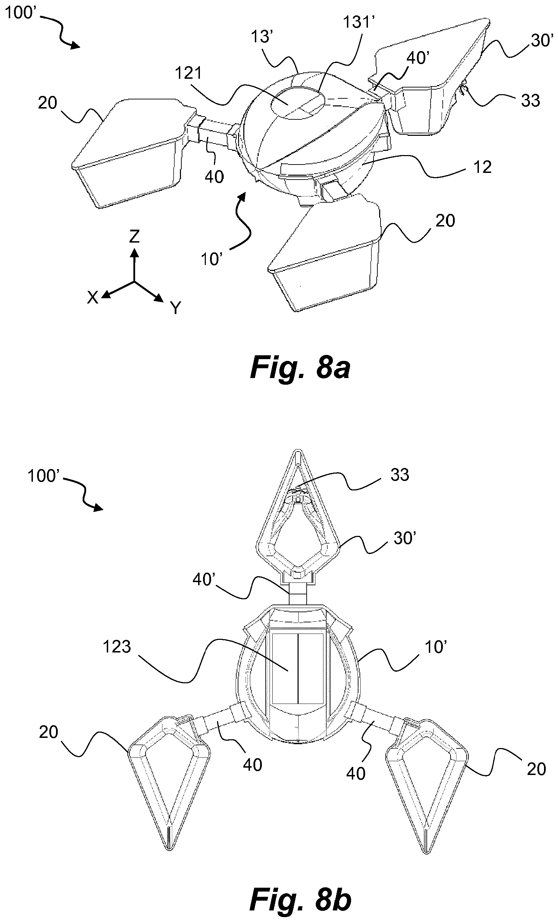

Dans le mode de réalisation illustré sur les figures 8a et 8b, un bateau amorceur radiocommandé 100' ne comporte que trois flotteurs, deux flotteurs avant 20, comme dans le cas du premier mode de réalisation décrit, et un flotteur arrière 30'. Le flotteur arrière est fixé par sa pointe avant à une coque centrale 10' avec un bras de liaison 40' pivotant. Les flotteurs avant sont quant à eux fixés de la même manière que dans le cas du premier mode de réalisation, c'est-à-dire à l'aide des bras de liaison 40 fixes.

Le flotteur arrière 30' selon ce mode de réalisation, comporte un moteur électrique couplé à une hélice 33 de propulsion d'axe parallèle à la direction longitudinale du bateau.

L'ensemble flotteur arrière 30' et bras de liaison 40' pivote dans le plan transversal du bateau, autour de l'axe Z, entre deux angles extrêmes. Ce mouvement de rotation est assuré par un servo moteur placé dans la coque centrale et relié au bras de liaison 40' pivotant, le servo moteur n'est pas représenté sur les figures.

Le contrôle directionnel du bateau est réalisé par la rotation du flotteur arrière, et donc de l'hélice de propulsion, dans le plan transversal du bateau.

La coque centrale 10' comporte, dans cet exemple de réalisation, un toit amovible 13' comportant une ouverture 131' dans sa partie supérieure sous forme d'un trou. Ladite ouverture permet le remplissage d'un bac d'amorce principal 121 contenu dans la coque inférieure 12.

Dans un autre exemple de réalisation non illustré, un ou plusieurs flotteurs, avant ou arrière, peuvent être moteurs, c'est-à-dire munis d'un système de propulsion.

Dans un autre exemple de réalisation non illustré, la coque centrale comporte plusieurs bacs d'amorçage et plusieurs fentes de largage de ligne.

Dans un mode de réalisation alternatif, les flotteurs comportent chacun un flotteur inférieur amovible sous forme d'une bombonne d'immersion. Avantageusement, cette solution présente une immersion, distance séparant la partie la plus basse desdits flotteurs inférieurs de la surface de l'eau, plus importante, améliorant ainsi la stabilité du bateau, en particulier dans le cas de pêches et de navigations extrêmes en présence de vagues et/ou de courants forts. Le même principe peut être appliqué à la coque centrale par l'installation sur ladite coque centrale d'une coque inférieure fermée.

De façon avantageuse le plateau 15 d'amorçage peut être intégré à des bateaux présentant différentes architectures, avec un moindre encombrement. Par exemple pour des bateaux à deux flotteurs de type catamarans, une partie supérieure de la coque est réalisée dans une forme adaptée à la réception du plateau d'amorçage.

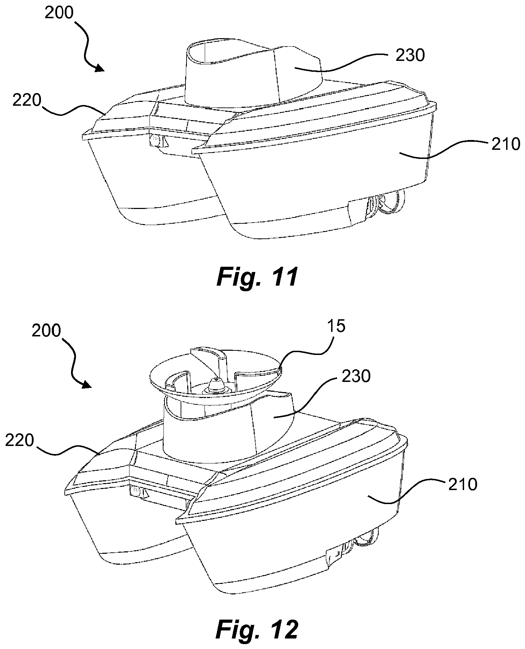

La figure 11 représente un bateau catamaran 200 selon l'invention et comportant une coque inférieure 210, connue dans l'état de l'art, et une coque supérieure 220 améliorée, ladite coque supérieure est surmontée d'un support vertical 230 adapté à la réception du plateau 15 d'amorçage.

La figure 12 représente le bateau catamaran 200 équipé d'un plateau 15 d'amorçage, ledit plateau étant positionné surélevé au dessus du support vertical 230 de la coque supérieure 220, de façon à éviter tout élément du bateau pouvant constituer un obstacle lors de l'amorçage.

Cette condition n'est cependant pas nécessaire et le plateau d'amorçage peut être positionné directement sur une coque sans support vertical. Ainsi, le plateau, tel que décrit, peut être simplement monté sur un arbre tournant traversant un trou ménagé dans la coque d'un bateau donné.

Le dispositif d'amorçage selon l'invention peut présenter des formes et des dimensions différentes de celles du plateau à ailettes 15, à condition que la dispersion de l'amorce soit assurée par une force centrifuge due à une rotation dudit dispositif d'amorçage.

Par exemple, le dispositif d'amorçage peut présenter une forme hémisphérique creuse, une forme tubulaire incurvée, ou tout autre forme permettant un stockage de l'amorce et une éjection de ladite amorce hors du dispositif d'amorçage par une rotation de celui-ci avec une vitesse de rotation minimale déterminée.

Dans un autre mode de réalisation, le bateau amorceur comporte plusieurs dispositifs d'amorçage, par exemple le bateau amorceur comporte un plateau tournant à chaque flotteur.

Dans un autre mode de réalisation, le bateau amorceur comporte un mécanisme permettant de ramener à la surface libre du dispositif d'amorçage une amorce stockée dans le bateau, à l'intérieur des flotteurs par exemple. Un tel mécanisme comporte par exemple un système de roue et vis sans fin, un ressort, ou un système d'aspiration. Ainsi le bateau amorceur peut transporter une quantité plus importante d'appât, pouvant atteindre 10kg.

Dans un mode de réalisation alternatif, le dispositif d'amorçage peut être monté sur une structure non motorisée tractée par le bateau, une telle structure peut alors être tractée par des bateaux radiocommandés qui ne sont pas nécessairement destinés à la pratique de la pêche.

Les différents modes de réalisation décrits ne sont en aucun cas limitatifs de la portée de l'invention.

L'homme du métier peut, de manière évidente, adapter les principes de l'invention à d'autres types d'applications. Par exemple, un bateau selon l'invention peut, à la place ou en plus du plateau amorceur, comporter une autre charge utile telle qu'une caméra, un échosondeur et/ou un système de positionnement par satellite. Ces exemples n'étant pas limitatifs, et toute charge utile similaire aux exemples cités peut être incorporée dans le bateau amorceur 100. système de dispersion d'amorce tournant opérant un largage d'amorce par éjection, auxiliairement au largage classique d'amorce et de ligne de pêche par ouverture de trappes, et un largage de ligne par une fente réalisée dans la coque du bateau. L'homme du métier peut, de manière évidente, adapter les principes de l'invention à d'autres types d'applications. Par exemple, un bateau selon l'invention peut, à la place ou en plus du plateau amorceur, comporter une autre charge utile telle qu'une caméra, un échosondeur et/ou un système de positionnement par satellite. Ces exemples n'étant pas limitatifs, et toute charge utile similaire aux exemples cités peut être incorporée dans le bateau amorceur 100.

## Revendications

1. Bateau amorceur comprenant deux coques parallèles, tel qu'un catamaran, **caractérisé en ce qu'**il comprend, situé au-dessus desdites coques, un dispositif d'éjection d'amorce (15, 16) comportant un élément tournant (15) entraîné en rotation autour d'un axe vertical, l'élément tournant présentant une surface supérieure dont la forme permet un stockage de l'amorce et une éjection de celle-ci par rotation de l'élément tournant, ledit élément tournant comportant sur sa surface supérieure au moins une ailette (153), ladite ailette présentant une extrémité extérieure située sur un bord de l'élément tournant et une extrémité intérieure située à l'intérieur dudit élément tournant à une distance D de l'axe vertical.

2. Bateau amorceur selon la revendication 1, dans lequel l'ailette (153) présente deux extrémités situées à des distances différentes de l'axe vertical de rotation de l'élément tournant (15).

3. Bateau amorceur selon la revendication 1 ou la revendication 2, dans lequel la surface supérieure de l'élément tournant (15) présente une concavité globale orientée vers le haut du bateau.

4. Bateau amorceur selon l'une quelconque des revendications précédentes, dans lequel la surface supérieure de l'élément tournant (15) comporte des gorges (151) concentriques autour de l'axe vertical de rotation, lesdites gorges formant un profil ondulé de ladite surface supérieure.

5. Bateau amorceur selon l'une quelconque des revendications précédentes, dans lequel le dispositif d'éjection d'amorce comporte un moteur électrique (16) entrainant en rotation l'élément tournant (15).

6. Bateau amorceur selon la revendication 5, dans lequel l'élément tournant (15) comporte un moyeu (152) dans lequel est engagé un arbre d'entrainement (161) du moteur électrique (16).

7. Bateau amorceur selon l'une quelconque des revendications précédentes, dans lequel l'ailette (153) présente un profil cambré et deux faces, une face convexe et une face concave.

8. Bateau amorceur selon l'une quelconque des revendications précédentes, dans lequel l'élément tournant (15) comporte une pluralité d'ailettes (153) régulièrement espacées.

9. Bateau amorceur selon la revendication 8, dans lequel l'élément tournant (15) comporte trois ou cinq ailettes (153).

10. Bateau amorceur selon l'une quelconque des revendications précédentes, dans lequel l'élément tournant (15) présente une forme de plateau circulaire.

## Patentansprüche

1. Futterboot, das zwei parallele Rümpfe umfasst, wie beispielsweise ein Katamaran, **dadurch gekennzeichnet, dass** es über den Rümpfen eine Köderauswurfvorrichtung (15, 16) umfasst, die ein sich drehendes Element (15) aufweist, das um eine vertikale Achse drehangetrieben wird, wobei das sich drehende Element eine obere Oberfläche aufweist, deren Form das Lagern des Köters und dessen Auswurf durch Drehung des sich drehenden Elements ermöglicht, wobei das sich drehende Element auf seiner oberen Oberfläche mindestens eine Lamelle (153) aufweist, wobei die Lamelle ein äußeres Ende, das sich an einer Kante des sich drehenden Elements befindet, und ein inneres Ende aufweist, das sich an der Innenseite des sich drehenden Elements in einem Abstand D von der vertikalen Achse befindet.

2. Futterboot nach Anspruch 1, wobei die Lamelle (153) zwei Enden aufweist, die sich in unterschiedlichen Abständen von der vertikalen Drehachse des sich drehenden Elements (15) befinden.

3. Futterboot nach Anspruch 1 oder Anspruch 2, wobei die obere Oberfläche des sich drehenden Elements (15) eine Konkavität aufweist, die im Wesentlichen zur Oberseite des Bootes hin ausgerichtet ist.

4. Futterboot nach einem der vorhergehenden Ansprüche, wobei die obere Oberfläche des sich drehenden Elements (15) konzentrisch um die vertikale Drehachse verlaufende Rillen (151) aufweist, wobei die Rillen ein wellenförmiges Profil der oberen Oberfläche bilden.

5. Futterboot nach einem der vorhergehenden Ansprüche, wobei die Köderauswurfvorrichtung einen Elektromotor (16) umfasst, der das sich drehende Element (15) antreibt.

6. Futterboot nach Anspruch 5, wobei das sich drehende Element (15) eine Nabe (152) aufweist, in die eine Antriebswelle (161) des Elektromotors (16) eingreift.

7. Futterboot nach einem der vorhergehenden Ansprüche, wobei die Lamelle (153) ein gewölbtes Profil und zwei Flächen, eine konvexe Fläche und eine konkave Fläche, aufweist.

8. Futterboot nach einem der vorhergehenden Ansprüche, wobei das sich drehende Element (15) eine Vielzahl von regelmäßig beabstandeten Lamellen (153) aufweist.

9. Futterboot nach Anspruch 8, wobei das sich drehende Element (15) drei oder fünf Lamellen (153) aufweist.

10. Futterboot nach einem der vorhergehenden Ansprüche, wobei das sich drehende Element (15) eine kreisförmige Plattenform aufweist.

## Claims

1. A bait boat comprising two parallel hulls, such as a catamaran, **characterised in that** it comprises, located above said hulls, a bait ejection device (15, 16) including a rotating element (15) driven in rotation about a vertical axis, the rotating element having an upper surface whose shape allows a storage of the bait and an ejection thereof by rotation of the rotating element, said rotating element including at least one fin (153) on the upper surface thereof, said fin having an outer end located on an edge of the rotating element and an inner end located inside said rotating element at a distance D from the vertical axis.

2. The bait boat according to claim 1, wherein the fin (153) has two ends located at different distances from the vertical axis of rotation of the rotating element (15).

3. The bait boat according to claim 1 or claim 2, wherein the upper surface of the rotating element (15) has an overall concavity oriented upwardly of the boat.

4. The bait boat according to any one of the preceding claims, wherein the upper surface of the rotating element (15) includes grooves (151) which are concentric about the vertical axis of rotation, said grooves forming a corrugated profile of said upper surface.

5. The bait boat according to any one of the preceding claims, wherein the bait ejection device includes an electric motor (16) driving in rotation the rotating element (15).

6. The bait boat according to claim 5, wherein the rotating element (15) includes a hub (152) in which a drive shaft (161) of the electric motor (16) is engaged.

7. The bait boat according to any one of the preceding claims, wherein the fin (153) has a cambered profile and two faces, a convex face and a concave face.

8. The bait boat according to any one of the preceding claims, wherein the rotating element (15) includes a plurality of regularly spaced fins (153).

9. The bait boat according to claim 8, wherein the rotating element (15) includes three or five fins (153).

10. The bait boat according to any one of the preceding claims, wherein the rotating element (15) has a circular tray shape.
